# EUROPEAN PATENT SPECIFICATION

(11) **EP 0 978 780 B1**
(45) Date of publication and mention of the grant of the patent: **04.06.2003**
(21) Application number: 98306295.1
(22) Date of filing: 06.08.1998
(51) Int. Cl.: G06F 1/32, G06F 11/30

(54) **Low-power-consumption monitor standby system**
Bereitschaftssystem für Rechnerbildschirm mit niedrigem Energieverbrauch
Système de mise en attente pour écran d'rdinateur a faible consommation d'énergie

(43) Date of publication of application: 09.02.2000
(73) Proprietor: Elonex I.P. Holdings Limited, London NW2 7LF (GB)
(72) Inventor: Kilkinis, Dan, Saratoga, CA 95070 (US)
(74) Representative: Freed, Arthur Woolf

(56) References cited:
- WO-A-94/12969
- PATENT ABSTRACTS OF JAPAN vol. 095, no. 003, 28 April 1995 & JP 06 342384 A (FUJITSU LTD), 13 December 1994
- PATENT ABSTRACTS OF JAPAN vol. 098, no. 006, 30 April 1998 & JP 10 031536 A (NEC CORP), 3 February 1998

## Description

The present invention is in the field of automatic power saving devices and pertains in particular to reduction of power consumption by computer video monitors.

Attention is drawn to WO94/1296 and US-A-5,389,952 which disclose a system, for lowering the power output of a video display monitor for a computer during periods or operator inactivity comprising a detector for detecting absence of one of colour, HSYNC, or VSYNC signals sent by a host computer; and a power manager circuit (553) coupled to the detector (339;451;551) (551) for reducing power consumption by power-using circuits in the cathode ray tube monitor. The power manager circuit reduces power to one or more of the power-using circuits in response to the detector (339;451;551) (551) detecting absence of one of the colour, HSYNC, or VSYNC signals.

A typical colour video monitor may consume as much as 50 to 80 percent of the total electrical energy consumed by a personal computer (PC). A video monitor dissipates this energy as visible light emissions from screen phosphors, thermal waste. electromagnetic radiation, high-energy radiation and acoustic energy. Only the phosphor emissions are normally considered useful and then only when actively being watched by an observer. The radiation emissions have been a hotly debated source of concern regarding possible health risks from long-term exposure. Manufacturers incur considerable extra expense to reduce radiation emissions from video monitors. Thermal losses from video monitors contribute an additional load on air conditioning equipment. The energy efficiency of video monitors has historically improved mostly as a result of advances in the electronic circuit components such as the increased use of integrated circuit (IC) devices. Cathode ray tube (CRT) technology has improved rather little in terms of energy efficiency.

The number of PC's in regular use in growing rapidly and has reached a point where they have become major consumers of electric power. The United States Environmental Protection Agency has issued power efficiency targets for computer manufacturers to design for in new systems. Low-voltage IC's use less energy, and microprocessor power management techniques allow a computer to reduce energy consumption when idling. Until a suitable replacement for the CRT or a more efficient CRT is developed it will be difficult to substantially improve personal computer energy efficiency.

What is needed is a way to shut down high-energy-consuming circuits in the video monitor when the computer determines that the display may be of no interest to anyone. This might be determined by a period of inactivity on input devices such a modem, mouse and keyboard. Many computers and video terminals use such a technique to activate a screen blanking circuit or a program that displays moving images (or no image) to avoid burning the screen phosphors. Activating an input device such as pressing a key or moving a mouse causes the previous screen image to be restored. This technique can be extended to reduce video monitor power consumption by signalling the microcontroller found in many recent design monitors, or an add-on device for "dumb" monitors, to shut down or restore some or all of the monitor's electrical power circuits. One key to accomplishing this end is a means of signalling a monitor to shut down to some selected level without adding to the signals presently provided to a monitor.

The invention provides a power management system for a computer system having a host computer with a central processing unit (CPU), a memory, input apparatus, and a video monitor, a power management system for managing power usage by the video monitor, comprising a timer dedicated to triggering a power-management routine, the timer having a preset input; a signal generator for generating at least one power-management command for the video monitor; and a power manager circuit in the video monitor; characterised by a random generator connected to the timer, and adapted to randomly generate count times for the timer in response to a start signal, wherein the random generator, in response to the start signal randomly generates a time interval to the timer preset input, and the timer, after the time interval passes causes the signal generator to send a power management command to the video monitor, and the video monitor assumes a reduced-power state other than off in response to the power management command.

The power management system may have a video display provided with VGA-standard signals, and wherein the power management command is coded in the VGA-standard signals provided to the video display.

The invention also provides a method for saving power in operation of a video monitor in a computer system wherein a host computer sends signals to communicate with the video monitor, comprising steps of (a) sensing operation of a start input in a random time-period generator; (b) providing the randomly generated time period to a preset input of a timer in response to the start input; (c) sending a power-management command to the video monitor in response to time out of the timer; (d) detecting the power-management command at the video monitor; (e) signalling power-management circuitry in the video monitor that a power-management command is received; and (f) reducing power to power-using circuitry in the video monitor to a level other than off by the power-management circuitry in response to the signal that a power-management command is received.

### Brief Description of the Drawings

Fig. 1 is a largely schematic representation of a PC according to an embodiment of the present invention.
Fig. 2A is a largely schematic representation of a PC enhanced by an add-on device according to an alternative embodiment of the present invention.
Fig. 2B is a largely schematic representation of a PC enhanced by an add-in device according to another alternative embodiment.
Fig. 3 is a largely schematic representation of a microcontroller-based video monitor according to an embodiment of the present invention.
Fig. 4 is a largely schematic representation of a "dumb" monitor equipped with an add-in device according to an alternative embodiment of the present invention.
Fig. 5 is a largely schematic representation of an add-on device for controlling AC primary power to a monitor according to another alternative embodiment of the present invention.
Fig. 6 is a block diagram illustrating a random generator connected to a timer for generating an activation signal for power management according to an embodiment of the present invention.
Fig. 7 is a block diagram illustrating computers connected on a network with a power-management server adapted for providing power management parameters to the connected computers in an embodiment of the present invention.

### Description of the Preferred Embodiments

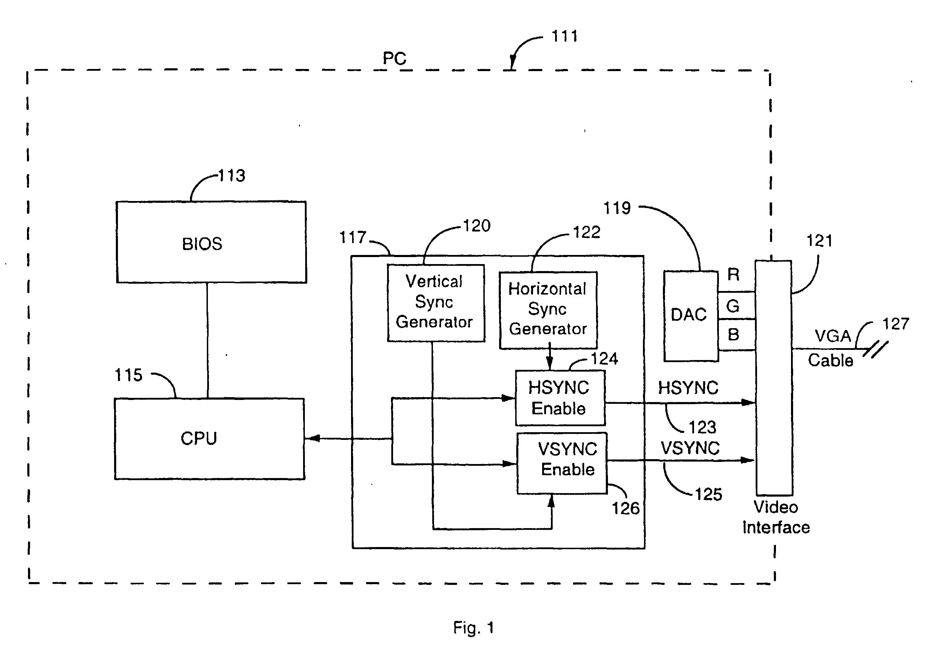

Fig. 1 shows the functional elements of a preferred embodiment of the present invention capable of providing 3 distinct signals to a monitor to signal the monitor to adjust to as many as three states. In an embodiment of the invention, the states are selected levels of monitor power management (MPM). The signal to the monitor is based on interrupting one or the other or both HSYNC and VSYNC signals. In the embodiment shown in Fig. 1 a PC 111 comprises a Basic Input Output System (BIOS) 113 and a Video Graphics Adapter (VGA) 117. The invention will work equally well with other video adapters, as virtually all such adapters employ HSYNC and VSYNC signals. In some other adapters, equivalent means of interrupting the HSYNC and VSYNC signals would be used.

BIOS 113 includes instructions for MPM, which can cause a central processing unit (CPU) 115 to change the state of sync-enable controls in VGA 117. In alternative embodiments instructions for implementing MPM might be embedded in operating system (OS) device driver routines or Terminate and Stay Resident (TSR) programs.

The MPM instructions monitor CPU 115 interrupts for input devices (not shown) such as the timer, keyboard and serial communication ports. MPM instructions advance a time-out counter on each timer interrupt and reset the count to an initial value on each monitored interrupt. The initial value of the MPM time-out counter may be fixed or adjustable. When the MPM time-out counter reaches a preset overflow value, due to cessation of monitored interrupts, instructions are executed that change the state of HSYNC Enable 124 and VSYNC Enable 126 control to disable output of horizontal synchronization signals (HSYNC) 123, produced by horizontal sync generator 122, and/or vertical synchronization signals (VSYNC) 125, produced by vertical sync generator 120, or both. A subsequent monitored interrupt causes execution of instructions that change the state of HSYNC Enable 124 and VSYNC Enable 126 control circuits to enable output of HSYNC 123 and VSYNC 125 signals from VGA 117.

In the case of a VGA controller, the enable/disable capability is through writing by the CPU into register 3C2 of the controller, wherein bits six and 7 are reserved for horizontal retrace polarity and vertical retrace polarity respectfully. HSYNC and VSYNC signals 123 and 125 are brought to interface 121 along with other signals, such as R, G, and B signals from D/A/converter 119. The signals are transmitted to a monitor on VGA cable 127 as is known in the art.

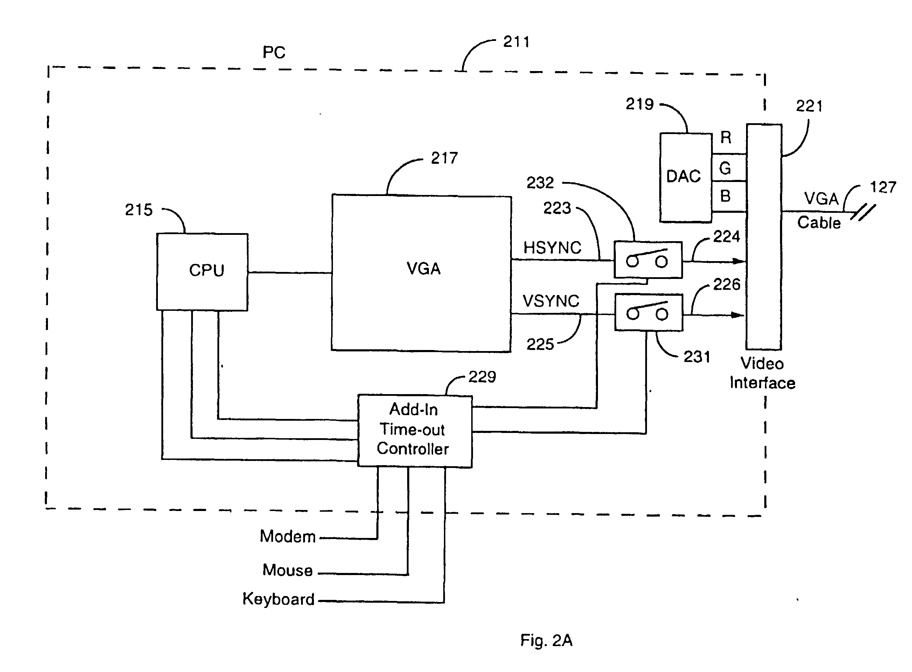

In an alternative example shown in Fig. 2A, useful for refitting existing computers, a current art PC 211 having a CPU 215 is enhanced by installation of a switch 231, which connects between a VGA 217 VSYNC output 225 and VSYNC input 226 to a video interface 221. In a color computer, R,G, and B signals are brought to interface 221 from DAC 219. An add-in time-out controller 229 comprising MPM instructions monitors input device activity as described above for Fig. 1. Time-out of all input devices causes instructions to be executed which change the state of program-controlled switch 231, blocking VSYNC input 225 to video interface 221. Resumption of monitored interrupts causes switch 231 to close, returning the VSYNC signals to line 226. A second switch 232 may be used in the HSYNC line to interrupt the HSYNC signals to line 224, and, in this embodiment, the add-in time-out controller controls both switches. In yet another alternative, one switch may be used to interrupt both HSYNC and VSYNC signals.

The functional blocks presented in Fig. 2A are an internal solution to an add-in hardware/software example and the blocks are not intended to be taken literally as hardware devices and interfaces. It will be apparent to one with skill in the art that there are many equivalent ways the functional blocks might be accomplished. The keyboard, mouse, and modem inputs are monitored by the add-in controller, and are made available as well to the CPU in the typical manner.

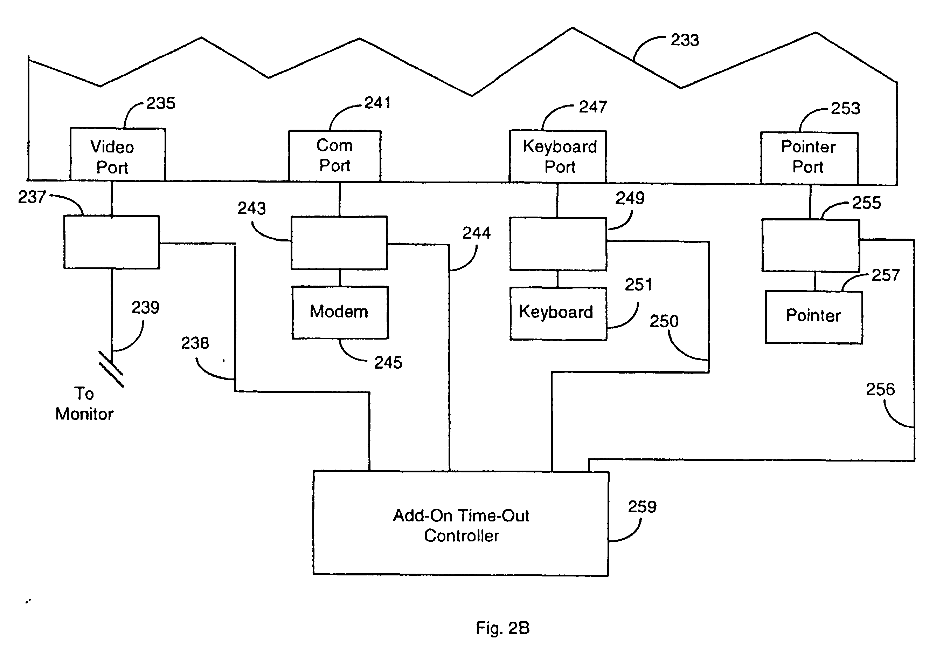

Fig. 2B shows an external solution for a hardware/software example. In this solution an add-on time-out controller 259 is external to computer system 233, and each port that supports an input device and the video output port is fitted with an interface device connected to the add-on time-out controller. For example, interface 243 at COM port 241 used for a modem 245 monitors modem activity and reports to controller 259 on line 244. Interface 249 at keyboard port 247 monitors keyboard 251 activity and reports to controller 259 on line 250. Interface 255 at pointer port 253 monitors pointer 257 activity (mouse, joystick, trackball), and reports to controller 259 on line 256.

In this example controller 259 accomplishes the timer functions and outputs signals on line 238 to interface device 237 at video port 235. Line 239 goes to the monitor. Device 237 interrupts HSYNC and VSYNC signals according to the overflow states of add-on controller 259.

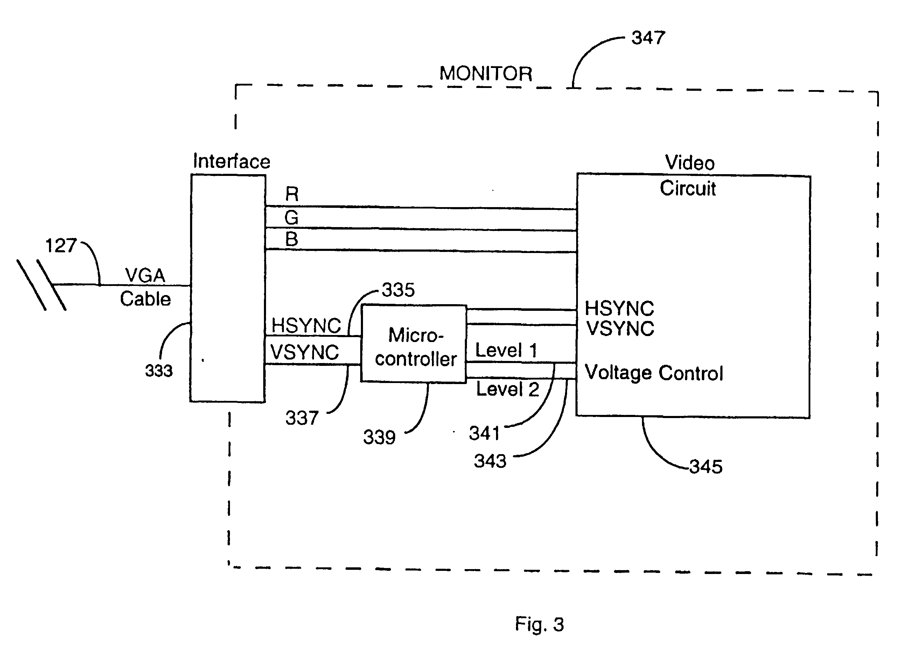

A color video monitor 347 according to an embodiment of the present invention is shown in Fig. 3. Monitor 347 comprises an interface 333, a microcontroller 339 having MPM instructions according to the present invention and a video circuit (VC) 345 having voltage control circuitry. From interface 333 HSYNC pulses 335 and VSYNC pulses 337 go to microcontroller 339. Microcontroller 339 monitors the HSYNC signal 335 and VSYNC signal 337. The MPM instructions described above count the number of HSYNC pulses occurring between each pair of VSYNC pulses. Zero HSYNC pulses counted causes the MPM instructions in microcontroller 339 to change the voltage on Level-2 signal line 343. Similarly, an interval count of HSYNC 335 pulses greatly in excess of the maximum video scan rate for monitor 347, indicating a loss of VSYNC 337, causes microcontroller 339 to change the voltage on Level-1 signal line 341. Resumption of HSYNC 335 to VSYNC 337 pulse interval counts to a range from the minimum to the maximum scan rate causes MPM instructions in microcontroller 339 to restore quiescent voltage levels to Level-1 signal line 341 and Level-2 signal line 343.

When video circuit 345 senses an active voltage level on Level-1 signal line 341, it cuts off power to all circuits in monitor 347 except microcontroller 339, any power necessary to interface 333, and video circuit 345 power-control circuits (not shown). In this level 1 standby mode, power consumption of monitor 347 is reduced by more than 90 percent. If monitor 347 remains in level 1 standby for more than a few seconds, full warm-up time is required to reactivate it. An active voltage level on Level-2 signal line 343 causes video circuit 345 to cut off power to all circuits except those described above plus the CRT cathode heater. In level 2 standby mode monitor 347 power consumption is reduced by 80 to 90 percent. Because the CRT is kept hot, reactivating monitor 347 from level 2 standby requires about 5 seconds or less. Reactivation of monitor 347 occurs when voltage on Level-1 signal line 341 and Level-2 signal line 343 returns to the quiescent state allowing video circuit 345 to activate power to all circuits of monitor 347.

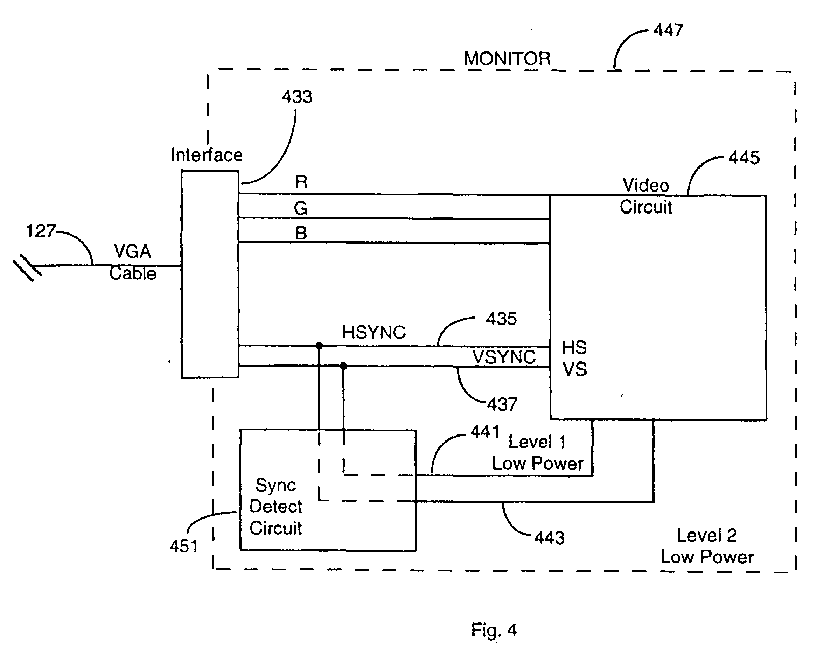

Fig. 4 shows an alternative embodiment of the present invention in a monitor 447 with video circuits functionally similar to those described for the monitor shown in Fig. 3, including an interface 433 and a video circuit 445, but without a microcontroller. A sync detect circuit 451 compares pulse intervals for HSYNC 435 and VSYNC 437 against time-constants of adequate duration to allow for brief interruptions of sync pulses. Loss of HSYNC 435 pulses or VSYNC 437 pulses for periods longer than the associated time-constants causes sync detector circuit 451 to change Level-1 signal line 441 or Level-2 signal line 443 voltage to its active state as described for Fig. 3 and with the same results. Similarly, resumption of HSYNC 435 and VSYNC 437 pulses reactivates monitor 447 as described for Fig. 3 above.

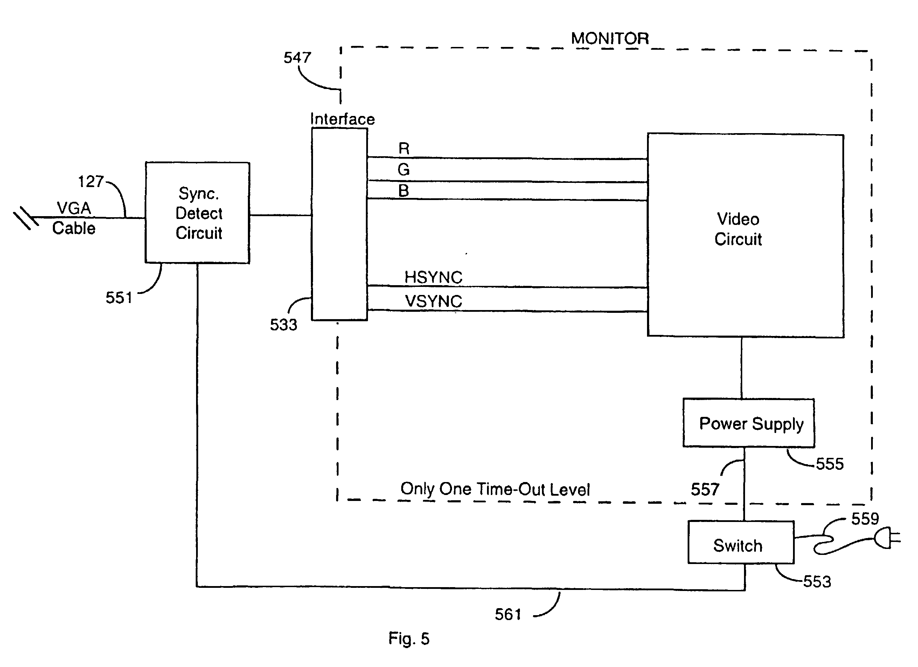

Fig. 5 shows another alternative example of the present invention suitable for add-on use with a monitor 547 having an interface 533. A sync detect circuit 551, in an external enclosure having pass-through connections, inserts into VGA cable 127. Sync detect circuit 551 monitors video signals on VGA cable 127 and compares the SYNC interval for one or the other of VSYNC and HSYNC to a time-constant in a manner similar to that described for Fig. 4 above. Loss of the monitored SYNC signal in VGA cable 127 for an interval longer than the time-constant causes sync detect circuit 551 to change the voltage on power-control line 561 to its active level, which in turn causes an electronically-controlled switch 553 to open. Electronically-controlled switch 553 controls AC primary power from an electrical cord 559 to a receptacle for monitor 547 power supply cord 557. When electronically-controlled switch 553 opens, AC power to a DC power supply 555 is lost, thus causing total shutdown of monitor 547. Resumption of SYNC signals in VGA cable 127 video signal causes sync detect circuit 551 to change power-control line 561 to its quiescent state, thus causing electronically-controlled switch 553 to close, which restores AC power input to DC power supply 555 reactivating monitor 547.

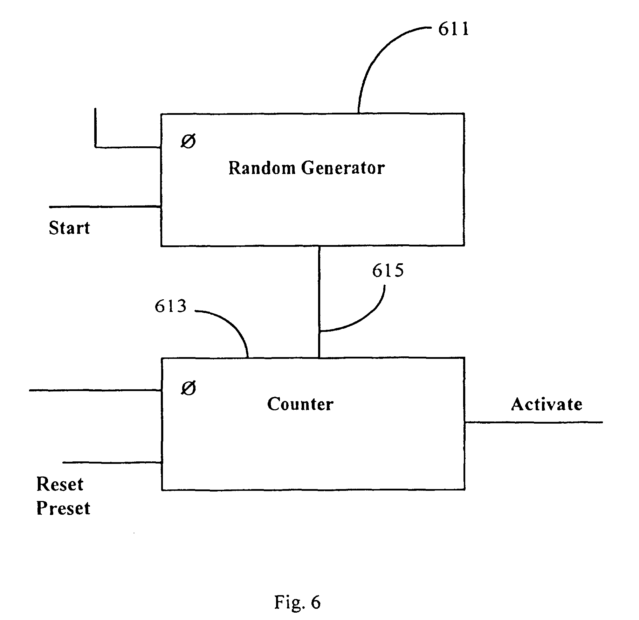

In a preferred embodiment of the invention time before initiation of power management is randomly generated. Fig. 6 is block diagram illustrating this situation. Instead of using a predetermined value for counting by the timer before activating a power down stage (first, second or both), a random value is generated for preloading the timer every time on presetting. Referring to Fig. 6, random number generator 611 is connected to timer 613 by a one or more line 615 for providing a preset input, and basic control logic (not shown) is used to control the sequence. The result will be a randomly generated time out, rather than a fixed preset or user preset (predetermined) value.

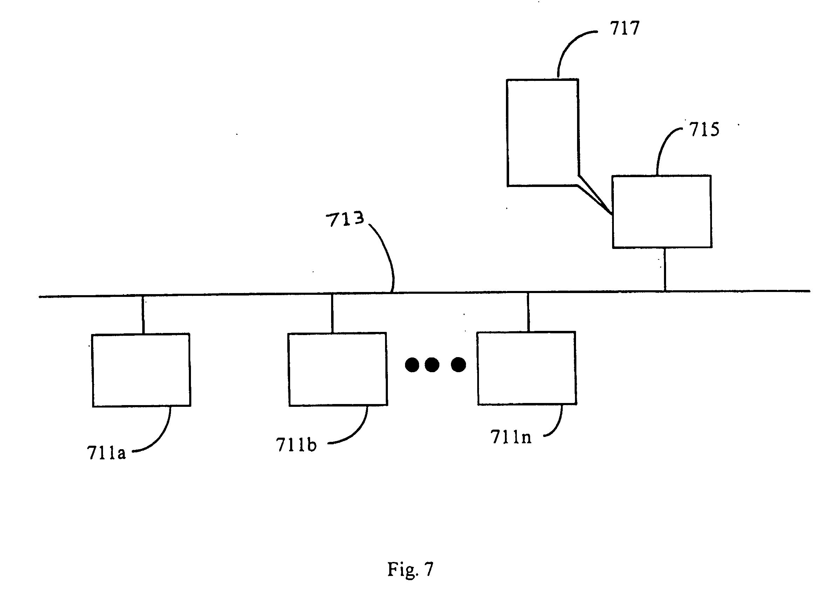

In another aspect, illustrated by Fig. 7, computer stations (71 la, 711b, 711n) may be interconnected on a network (LAN or WAN) 713 along with a server 715 adapted by MPM application 717 for providing power management parameters to the connected computer stations. A value may be sent or broadcast over the network to either control a time period in response to any parameters, such as environment, time of day, year, random generated numbers etc. It will be clear to the skilled artisan that such timer could exist in the computer, monitor, both or even in the network. Also, it will be clear that implementations can be integrated into ICs as hardware or as firmware, or equivalents may be programmed into software, both in the computer and or the monitor (firmware), as well as in a server on the network.

In yet another example initiation of power management process for one or more computers may be done from a remote computer as a server on a network, such as server 715 of Fig. 7, without the expediency of providing a time period to be timed at the local computer(s). In this aspect server 715 monitors activity at local computers. The local computers may be adapted, for example, to send a periodic report to the power management server. The power management server tracks the periodicity of receipt for local computers, and, when and if a local computer fails to report activity for a certain number of report periods, the power management server sends a command to the local computer to put that computer into power-management mode. The power management program thus initiated may vary widely, from simply shutting of the monitor at the local computer, sending the computer and or the monitor into a suspend or a sleep mode, distinguishing between a multiplicity of modes that might be serially entered by timing at the local computer, and so on.

In one embodiment involving random generation of time periods, in a computer system having a host computer with a central processing unit (CPU), a memory, input apparatus, and a video monitor, a power management system for managing power usage by the video monitor is provided, comprising a timer dedicated to triggering a power-management routine, the timer having a preset input; a random generator connected to the timer, and adapted to randomly generate count times for the timer in response to a start signal; a signal generator for generating at least one power-management command for the video monitor ; and a power manager circuit in the video monitor. In this embodiment the random generator, in response to the start signal randomly generates a time interval to the timer preset input, and the timer, after the time interval passes, causes the signal generator to send a power management command to the video monitor, and the video monitor assumes a reduced-power state other than off in response to the power management command. In this embodiment the video display may be provided with VGA-standard signals, and the power management command is coded in the VGA-standard signals provided to the video display.

In another embodiment, in a computer system having a host computer with a central processing unit (CPU), a memory, input apparatus, and a video monitor, a power management system for managing power usage by the video monitor is provided, comprising a timer dedicated to triggering a power-management routine, the timer having a preset input; a random generator connected to the timer, and adapted to randomly generate count times for the timer in response to a start signal; a signal generator for generating at least one power-management command for the video monitor; and a power manager circuit in the video monitor. In this the random generator, in response to the start signal, randomly generates a time interval to the timer preset input, and the timer, after the time interval passes causes the signal generator to send a power management command to the video monitor, and the video monitor assumes a reduced-power state other than off in response to the power management command.

In yet another embodiment a computer is provided comprising a central processing unit (CPU); a memory connected to the CPU for storing data and instruction routines; input apparatus coupled to the CPU for a user to provide input to the computer; a user input dedicated to starting a random time-period generator connected to a preset input of a timer; and a signal generator adapted for sending at least one power management command to a port adapted for communication with a video monitor. In this embodiment activation of the user input causes the random time-period generator to provide a time period to the timer, and after passage of the time period the timer activates the signal generator to send a power management command to the port adapted to communicate with the video monitor.

In still another embodiment a method for saving power in operation of a video monitor in a computer system wherein a host computer sends signals to communicate with the video monitor is provided, comprising steps of (a) sensing operation of a start input in a random time-period generator; (b) providing a randomly generated time period to a preset input of a timer in response to the start input; (c) sending a power-management command to the video monitor in response to time out of the timer; (d) detecting the power-management command at the video monitor; (e) signaling power-management circuitry in the video monitor that a power-management command is received; and (f) reducing power to power-using circuitry in the video monitor to a level other than off by the power-management circuitry in response to the signal that a power-management command is received.

In still another example in a computer system having a plurality of computer stations connected on a network, each computer station having a host computer with a central processing unit (CPU), a memory, input apparatus, a video monitor, a timer dedicated to triggering a power-management routine, a signal generator for generating at least one power-management command for the peripheral device; and a power manager circuit in the video monitor, a power management system for managing power usage by the video monitors is provided, comprising a power-management server connected on the network; and a Monitor Power Management code set executing on the power-management server. In this example the power-management server provides preset times to the timers in the network-connected computers, and the timers in turn, upon time-out, trigger power management commands to the monitors causing the monitors to assume reduced power states.

In still another example a method is provided for saving power in operation of a plurality of computer stations connected on a network, each computer station having a host computer with a central processing unit (CPU), a memory, input apparatus, a video monitor, a timer dedicated to triggering a power-management routine, a signal generator for generating at least one power-management command for the video monitor; and a power manager circuit in the video monitor. The method comprises steps of (a) sending preset time periods to individual ones of the computer stations from a power-management server connected on the network; (b) initiating timing of the timers; (c) sending power-management commands to the video monitors in response to time-out of the timers in the computer stations; (d) detecting the power-management commands at the video monitors; and (e) reducing power to power-using circuitry in the video monitor to a level other than off in response to power-management commands.

In still another example, in a computer system having a computer station connected on a network, the computer station having a host computer with a central processing unit (CPU), a memory, input apparatus, a video monitor, a signal generator for generating at least one power-management command for the video monitor; and a power manager circuit in the video monitor, a power management system for managing power usage by the video monitors is provided, comprising a power-management server connected on the network; and a Monitor Power Management code set executing on the power-management server. The power-management server monitors activity at the computer station, and in the absence of activity beyond a threshold time period sends a command to the computer station to enter a power management sequence.

In yet another example a method for saving power in operation of a computer station connected on a network is provided, the computer station having a host computer with a central processing unit (CPU), a memory, input apparatus, a video monitor, a power-management routine, a signal generator for generating at least one power-management command for the video monitor; and a power manager system in the video monitor. The method comprises steps of (a) monitoring activity at the computer station by a power management server connected on the network; and (b) in the event of a period of inactivity at the computer station beyond a preset threshold, sending a command from the power manager server to the computer station to enter a power management sequence.

It will be apparent to one with skill in the art that there are many changes that might be made without departing from the scope of the invention as defined by the claims. Some of these alternatives have already been described, such as MPM instructions implemented in an OS device driver or TSR routines instead of the BIOS, single-level MPM instead of two-level MPM and an external video monitor power control device. Other methods of signaling MPM state changes to a monitor might include time-based coded sequences of frequency changes in HSYNC or VSYNC, coded values in the color signals, or no color signal for an extended period. Alternative examples of MPM routines might allow an operator to control MPM operation through command steps, such as menus, dialog boxes or command lines. Such controls might include shutting down monitor power at will by pressing a "hot key", typing a command line or other program interface step. Other features might allow the operator to change the idle time required to trigger MPM and toggle MPM monitoring on or off. Alternative MPM routines might also require an operator to type a password before enabling the transmission of normal video signals to the video monitor. Alternative devices for both built-in and post-manufacture modification to implement monitor power control might be devised. Embodiments of the present invention for monochromatic and gray-scale video adapters and monitors are also contemplated.

## Claims

1. A power management system for a computer system having a host computer with a central processing unit (CPU) (115), a memory, input apparatus, and a video monitor (347), the power management system for managing power usage by the video monitor, comprising:
a timer (613) dedicated to triggering a power-management routine, the timer having a preset input;
a signal generator (113; 229; 259) for generating at least one power-management command for the video monitor; and
a power manager circuit (345) in the video monitor;
**characterised by** a random generator (611) connected to the timer, and adapted to randomly generate count times for the timer in response to a start signal, wherein the random generator (611), in response to the start signal randomly generates a time interval to the timer preset input, and the timer, after the time interval passes causes the signal generator to send a power management command to the video monitor (347), and the video monitor assumes a reduced-power state other than off in response to the power management command.

2. A power management system as in claim 1 wherein the video monitor (347) is provided with VGA-standard signals, and wherein the power management command is coded in the VGA-standard signals provided to the video display.

3. A method for saving power in operation of a video monitor (347) in a computer system wherein a host computer (111) sends signals to communicate with the video monitor, comprising steps of:
(a) sensing operation of a start input in a random time-period generator (611);
(b) providing the randomly generated time period to a preset input of a timer (613) in response to the start input;
(c) sending a power-management command to the video monitor (347) in response to time out of the timer (613);
(d) detecting the power-management command at the video monitor (3347);
(e) signalling power-management circuitry (345) in the video monitor that a power-management command is received; and
(f) reducing power to power-using circuitry in the video monitor to a level other than off by the power-management circuitry (345) in response to the signal that a power-management command is received.

## Patentansprüche

1. Energieverwaltungssystem für ein Computersystem, welches einen Hostcomputer mit einer Zentralverarbeitungseinheit (CPU) (115), einem Speicher, einer Eingabeverrichtung und einem Videomonitor (347) aufweist, wobei das Energieverwaltungssystem zum Verwalten des Energieverbrauchs durch den Videomonitor vorgesehen ist, umfassend:
einen Timer (613), der speziell zum Triggern einer Energieverwaltungsroutine vorgesehen ist, wobei der Timer einen voreingestellten Eingang aufweist;
einen Signalgenerator (113; 229; 259) zum Erzeugen wenigstens eines Energieverwaltungsbefehls für den Videomonitor; und
eine Energieverwalterschaltung (345) in dem Videomonitor;
**gekennzeichnet durch** einen Zufallsgenerator (611), der mit dem Timer verbinden und dafür ausgelegt ist, um Zählzeiten für den Timer im Ansprechen auf ein Startsignal zufällig zu erzeugen, wobei der Zufallsgenerator (611) im Ansprechen auf das Startsignal ein Zeitintervall an dem voreingestellten Eingang des Timers erzeugt und der Timer, nachdem das Zeitintervall vorbeigeht, den Signalgenerator veranlasst einen Energieverwaltungsbefehl an den Videomonitor (347) zu senden, und der Videomonitor im Ansprechen auf den Energieverwaltungsbefehl einen Zustand mit verringerter Energie, der ein anderer als aus ist, einnimmt.

2. Energieverwaltungssystem nach Anspruch 1, wobei der Videomonitor (347) mit Signalen des VGA-Standards versehen wird und wobei der Energieverwaltungsbefehl in den Signalen des VGA-Standards, die an der Videoanzeige bereitgestellt werden, kodiert wird.

3. Verfahren zur Energieeinsparung beim Betrieb eines Videomonitors (347) in einem Computersystem, in dem ein Hostcomputer (111) Signale zum Kommunizieren mit dem Videomonitor sendet, umfassend die folgenden Schritte:
a) Erfassen eines Betriebs eines Starteingangs in einem Zufallszeitperiodengenerator (611);
b) Bereitstellen der zufällig erzeugten Zeitperiode an einem voreingestellien Eingang eines Timers (613) im Ansprechen auf den Starteingang;
c) Senden eines Energieverwaltungsbefehls an den Videomonitor (347) im Ansprechen auf einen Zeitablauf des Timers (613);
d) Erfassen des Energieverwaltungsbefehls an dem Videomonitor (347);
e) Signalisieren der Energieverwaltungs-Schaltungsanordnung (345) in dem Videomonitor, dass ein Energieverwaltungsbefehl empfangen wird; und
f) Verringern der Energie zu einer Energie verbrauchenden Schaltungsanordnung in dem Videomonitor auf einen anderen Pegel als aus durch die Energieverwaltungs-Schaltungsanordnung (345) im Ansprechen auf das Signal, dass ein Energieverwaltungsbefehl empfangen wird.

## Revendications

1. Système de gestion de puissance pour un système d'ordinateur qui comporte un ordinateur hôte avec une unité centrale de traitement (CPU) (115), une mémoire, un appareil d'entrée et un moniteur vidéo (347), le système de gestion de puissance permettant de gérer une utilisation de puissance par le moniteur vidéo, comprenant:
une minuterie (613) qui est dédiée au déclenchement d'un sous-programme de gestion de puissance, la minuterie comportant une entrée de pré-établissement;
un générateur de signal (113; 229; 259) pour générer au moins une commande de gestion de puissance pour le moniteur vidéo; et
un circuit de gestion de puissance (345) dans le moniteur vidéo,
**caractérisé par** un générateur aléatoire (611) qui est connecté à la minuterie et qui est adapté pour générer de façon aléatoire des temps de comptage pour la minuterie en réponse à un signal de démarrage, où le générateur aléatoire (611), en réponse au signal de démarrage, génère de façon aléatoire un intervalle temporel sur l'entrée de pré-établissement de minuterie et la minuterie, après l'intervalle temporel, force le générateur de signal à envoyer une commande de gestion de puissance sur le moniteur vidéo (347), et le moniteur vidéo prend un état de puissance réduite autre qu'une coupure en réponse à la commande de gestion de puissance.

2. Système de gestion de puissance selon la revendication 1, dans lequel le moniteur vidéo (347) reçoit en application des signaux de standard VGA et dans lequel la commande de gestion de puissance est codée dans les signaux de standard VGA qui sont appliqués sur l'affichage vidéo.

3. Procédé pour économiser l'énergie au niveau du fonctionnement d'un moniteur vidéo (347) dans un système d'ordinateur dans lequel un ordinateur hôte (111) envoie des signaux pour communiquer avec le moniteur vidéo, comprenant les étapes de:
(a) détection d'une entrée de démarrage dans un générateur de période temporelle aléatoire (611);
(b) application de la période temporelle générée de façon aléatoire sur une entrée de pré-établissement d'une minuterie (613) en réponse à rentrée de démarrage;
(c) envoi d'une commande de gestion de puissance sur le moniteur vidéo (347) en réponse à un dépassement de temps imparti de la minuterie (613);
(d) détection de la commande de gestion de puissance au niveau du moniteur vidéo (347);
(e) signalisation à un circuit de gestion de puissance (345) dans le moniteur vidéo du fait qu'une commande de gestion de puissance est reçue; et
(f) réduction de la puissance sur un circuit d'utilisation de puissance dans le moniteur vidéo jusqu'à un niveau autre qu'une coupure au moyen du circuit de gestion de puissance (345) en réponse au signal consistant en ce qu'une commande de gestion de puissance est reçue.
